(19) Europäisches Patentamt
European Patent Office
Office européen des brevets

(11) EP 2 749 840 A1

(12) EUROPEAN PATENT APPLICATION

(43) Date of publication:
02.07.2014 Bulletin 2014/27

(51) Int Cl.:
G01B 21/20 (2006.01)      G01B 5/20 (2006.01)
G01B 11/24 (2006.01)

(21) Application number: 13199527.6

(22) Date of filing: 24.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.12.2012 JP 2012288560

(71) Applicant: CANON KABUSHIKI KAISHA
Ohta-ku
Tokyo 146-8501 (JP)

(72) Inventors:
• Nishikawa, Yuya
  Ohta-ku Tokyo (JP)
• Kuramoto, Yoshiyuki
  Ohta-ku Tokyo (JP)
• Nakauchi, Akihiro
  Ohta-ku Tokyo (JP)

(74) Representative: Northway, Daniel Robert
Canon Europe Ltd
European Patent Department
3 The Square
Stockley Park
Uxbridge, Middlesex UB11 1ET (GB)

(54) **Measurement apparatus and measurement method**

(57) The present invention provides a measurement apparatus for measuring a shape of an object to be measured, comprising a measuring head (1) configured to perform measurement in a first measurement mode and perform measurement in a second measurement mode having measurement accuracy higher than that of the first measurement mode, and a control unit (20) configured to control the measuring head, wherein in the first measurement mode, the control unit moves the measuring head outside an occupancy region within which the object to be measured should fall while the object to be measured falls within the occupancy region, and in the second measurement mode, the control unit moves, the measuring head to satisfy an allowable condition in the second measurement mode based on a measurement result in the first measurement mode.

F I G. 1

EP 2 749 840 A1

# F I G. 4

1

16

17

MEASUREMENT RANGE
IN ACTUAL MEASUREMENT

MEASUREMENT RANGE
IN PRELIMINARY
MEASUREMENT

**Description**

BACKGROUND OF THE INVENTION

Field of the Invention

The present invention relates to a measurement apparatus and a measurement method.

Description of the Related Art

There is known a three-dimensional coordinate measurement apparatus (CMM: Coordinate Measuring Machine). The measurement apparatus includes a contact touch probe or non-contact optical probe on a measuring head, and measures coordinates on the surface of an object to be measured (the size and shape of an object to be measured) by moving the measuring head.

To measure an object to be measured by such measurement apparatus, it is necessary to align the object to be measured with respect to the measurement apparatus before the start of measurement. To align the object, an operator needs to measure a plurality of reference positions (the positions of reference points) of the object to be measured by moving the measuring head while visually confirming the positional relationship between the object to be measured and the measuring head (probe). This operation is cumbersome and is difficult for an unexperienced operator. Furthermore, a measurement result may vary depending on the skill level of the operator.

To reduce such inconvenience, an intelligent coordinate measurement system is proposed (non-patent literature 1). This system specifies an object to be measured and configures the coordinates of a measuring head for actual measurement by performing rough preliminary measurement for the whole object to be measured using a non-contact sensor, and comparing a preliminary measurement result with design data (CAD data) of the object to be measured, which has been registered in advance. The system then performs actual measurement by moving the measuring head (probe) based on its configured coordinates.

In automatic measurement described in non-patent literature 1, the measuring head may collide against the object to be measured, which imposes a limitation that the measuring head cannot be moved until the object to be measured is completely specified. Therefore, there is no problem if it is possible to specify the object to be measured by preliminary measurement but it may be impossible to specify the object to be measured due to the presence of a blind spot depending on the shape and arrangement of the object to be measured. Furthermore, if an object detection range for specifying the object to be measured is narrowed to allow a blind spot to some extent, the object to be measured may be erroneously specified and thus the measuring head may collide against the object to be measured.

[Non-Patent Literature 1] Sonko Osawa, "Latest Trend and Future Business Development of Three-Dimensional Measurement", [online], March 25, 2010, AIST (National Institute of Advanced Industrial Science and Technology), Geometrical Shape Measurement Study Group, [searched on November 29, 2012], Internet <URL: http://www.nmij.jp/~regional-innovation/kikakeijo/docimgs/100325_osawa.pdf>

SUMMARY OF THE INVENTION

The present invention provides, for example, a measurement apparatus advantageous in automating measurement.

The present invention in its first aspect provides a measurement apparatus as specified in claims 1 to 11.

The present invention in its second aspect provides a measurement method as specified in claim 12.

Further features of the present invention will become apparent from the following description of exemplary embodiments with reference to the attached drawings.

BRIEF DESCRIPTION OF THE DRAWINGS

Fig. 1 is a view showing a measurement apparatus according to the first embodiment;
Fig. 2 is a view showing the arrangement of a measuring head according to the first embodiment;
Fig. 3 is a view showing the arrangement of another measuring head according to the first embodiment;
Fig. 4 is a view showing the arrangement of sill another measuring head according to the first embodiment;
Fig. 5 is a flowchart illustrating a process of measuring the shape of an object to be measured;
Fig. 6A is a view showing an example of the arrangement of a measurement apparatus including a detection unit;
Fig. 6B is a view showing the arrangement of a light projector and that of a light receiver;

Fig. 7 is a view showing an example of the arrangement of a measurement apparatus including a detection unit;

Fig. 8 is a view showing an example of the arrangement of a measurement apparatus including indices indicating an allowable region;

Fig. 9 is a view showing a measuring head including a collision preventing sensor;

Fig. 10 is a view showing the arrangement of a measuring head according to the third embodiment;

Fig. 11 is a view showing the arrangement of another measuring head according to the third embodiment;

Fig. 12 is a view showing the arrangement of still another measuring head according to the third embodiment;

Fig. 13 is a view showing the arrangement of a measuring head according to the fourth embodiment;

Fig. 14 is a view showing the arrangement of a measuring head according to the fifth embodiment;

Fig. 15 is a view showing the arrangement of another measuring head according to the fifth embodiment; and

Fig. 16 is a view showing a measurement apparatus according to the sixth embodiment.

DESCRIPTION OF THE EMBODIMENTS

Exemplary embodiments of the present invention will be described below with reference to the accompanying drawings. Note that the same reference numerals denote the same members throughout the drawings, and a repetitive description thereof will not be given.

<First Embodiment>

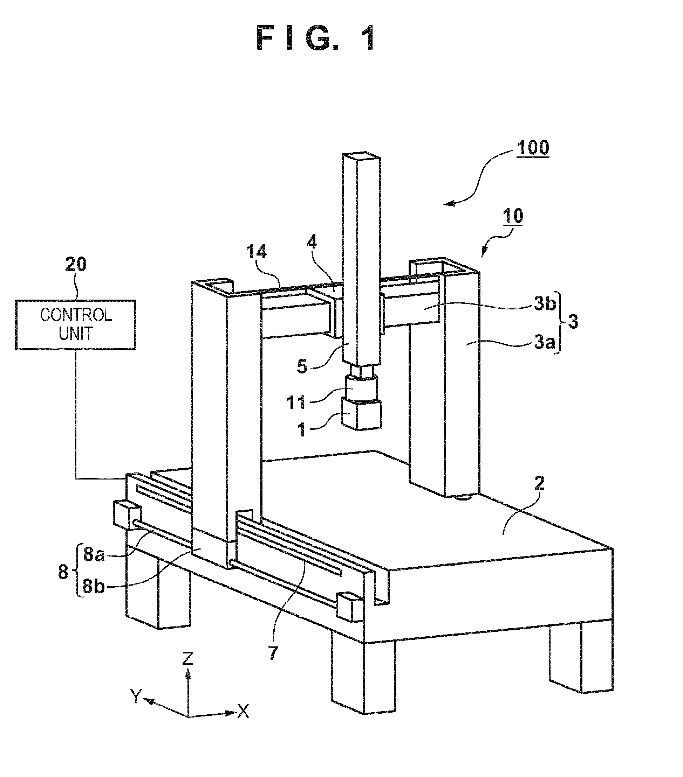

A measurement apparatus 100 according to the first embodiment of the present invention will be described with reference to Fig. 1. Fig. 1 is a view showing the measurement apparatus 100 according to the first embodiment. The measurement apparatus 100 according to the first embodiment includes a measuring head 1 for measuring the shape of an object to be measured, a driving unit 10 for driving the measuring head 1, and a control unit 20 for controlling the measuring head 1 and the driving unit 10. The measurement apparatus 100 according to the first embodiment measures the shape of the object to be measured while moving the measuring head 1 along the surface (surface to be measured) of the object to be measured so that, for example, the distance between the measuring head 1 and the surface to be measured becomes constant. Note that movement will also be referred to as motion or shift and can include not only a change in position but also a change in attitude.

The arrangement of the driving unit 10 according to the first embodiment will be explained. The driving unit 10 includes, for example, a base 2 on which the object to be measured is arranged, a Y carriage 3, an X slider 4, a Z spindle 5, and a rotary head 11. The Y carriage 3 is configured to have a gate structure including a pair of legs 3a and an X beam 3b, and is supported by the base 2 through an air guide. One of the legs 3a of the Y carriage 3 includes a Y driving unit 8 for driving the Y carriage 3 in the Y direction. The Y driving unit 8 includes a Y shaft 8a disposed on the base 2 and a Y movable unit 8b disposed on the Y carriage 3. The Y driving unit 8 can drive the Y carriage 3 in the Y direction by moving the Y movable unit 8b along the Y shaft 8a. The X slider 4 is supported by the X beam 3b of the Y carriage 3 through an air guide, and includes an X driving unit for driving the X slider 4 along the X direction. The X driving unit is formed by an X shaft 14 disposed on the Y carriage 3 and an X movable unit disposed on the X slider 4, and can move the X slider 4 in the X direction by moving the X movable unit along the X shaft 14. The Z spindle 5 is supported by the X slider 4 through an air guide, and includes a Z driving unit for driving the Z spindle 5 along the Z direction. The Z driving unit is formed by a Z shaft disposed on the X slider 4 and a Z movable unit disposed on the Z spindle 5, and can drive the Z spindle 5 along the Z direction by moving the Z movable unit along the Z shaft. The measuring head 1 is disposed at the distal end of the Z spindle 5 via the rotary head 11. The rotary head 11 can rotate the measuring head 1 about the X-, Y-, and Z-axes, thereby changing the attitude of the measuring head 1.

With this arrangement of the driving unit 10, the measurement apparatus 100 according to the first embodiment can measure the shape of the object to be measured while changing the position and attitude of the measuring head 1. The driving unit 10 includes a Y encoder 7 for measuring the position of the Y carriage 3 in the Y direction, an X encoder for measuring the position of the X slider in the X direction, and a Z encoder for measuring the position of the Z spindle in the Z direction. The measurement apparatus 100 according to the first embodiment can acquire the position coordinates of the measuring head 1 based on the position of the Y carriage 3 measured by the Y encoder 7, the position of the X slider 4 measured by the X encoder, and the position of the Z spindle 5 measured by the Z encoder.

The arrangement of the measuring head 1 will be described next. The measurement apparatus 100 according to the first embodiment can measure the shape of the object to be measured by moving the measuring head 1 along the surface (surface to be measured) of the object to be measured so that, for example, the distance between the measuring head 1 and the surface to be measured becomes constant. If the measurement apparatus 100 measures the shape of the object to be measured by the measuring head 1 in a non-contact manner, the measurement accuracy of the measuring head 1 is inversely proportional to the distance between the measuring head 1 and the surface to be measured. To measure the shape of the object to be measured with high accuracy, it is necessary to move the measuring head 1 while keeping the measuring head 1 as close as possible to the surface to be measured. To move the measuring head 1 while keeping the measuring head 1 close to the surface to be measured, however, it is necessary to identify the arrangement position and shape of the object to be measured. To do this, before performing actual measurement to measure the shape of the object to be measured with high accuracy while keeping the measuring head 1 close to the surface to be measured, the measurement apparatus 100 according to the first embodiment performs preliminary measurement to roughly measure the shape of the object to be measured while ensuring a given distance between the measuring head 1 and the surface to be measured. In preliminary measurement, the measurement accuracy of the measuring head 1 is set lower than that in actual measurement, and the measuring head is moved while ensuring a given distance between the measuring head 1 and the surface to be measured, thereby measuring the shape of the object to be measured. As described above, since the measurement apparatus 100 according to the first embodiment performs measurement a plurality of times while changing the measurement accuracy of the measuring head 1, the measuring head 1 is configured to have a plurality of measurement modes (first measurement mode and second measurement mode). Note that the measurement apparatus 100 measures the shape of the object to be measured by setting the measurement mode of the measuring head 1 to the first measurement mode in preliminary measurement, and measures the shape of the object to be measured by setting the measurement mode of the measuring head 1 to the second measurement mode in actual measurement. The measurement accuracy of the measuring head 1 in the second measurement mode is set higher than that in the first measurement mode.

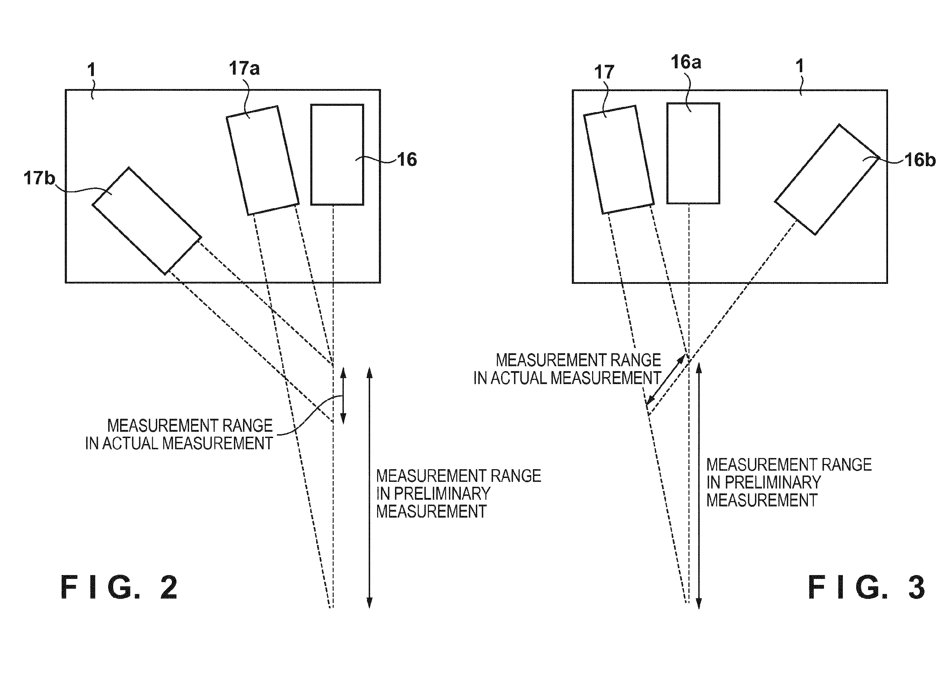

The arrangement of the measuring head 1 according to the first embodiment will be described with reference to Figs. 2 to 4. In the first embodiment, a case in which the shape of the object to be measured is measured using a light-section method (line-light projection type triangulation) will be explained. The light-section method is a method of acquiring height information of the object to be measured by illuminating the object to be measured with line light, imaging the object to be measured which is illuminated with the line light, and detecting the distortion amount of the line light generated according to the shape of the object to be measured. In the light-section method, the measuring head 1 can include an illumination unit 16 for illuminating the object to be measured with line light, and an imaging unit 17 (for example, a CCD camera or CMOS camera) for imaging the object to be measured which is illuminated with the line light. The measuring head 1 is configured to measure the shape of the object to be measured in the first measurement mode used in preliminary measurement and the second measurement mode used in actual measurement. Examples of the arrangement of the measuring head 1 shown in Figs. 2 to 4 will be explained below.

A measuring head 1 shown in Fig. 2 includes one illumination unit 16 and two imaging units 17a and 17b, and uses the common illumination unit 16 when measuring the object to be measured in the first measurement mode and when measuring the object to be measured in the second measurement mode. The two imaging units 17a and 17b are arranged so that their imaging directions are different from each other. When measuring the object to be measured in the first measurement mode, the illumination unit 16 and the imaging unit 17a are used. When measuring the object to be measured in the second measurement mode, the illumination unit 16 and the imaging unit 17b are used. This can set a measurement range when measuring the object to be measured in the first measurement mode (preliminary measurement) wider than that when measuring the object to be measured in the second measurement mode (actual measurement). That is, in preliminary measurement, the measurement apparatus 100 can measure the object to be measured while the distance between the surface to be measured and the measuring head 1 is set longer than that in actual measurement. On the other hand, in actual measurement, the measurement apparatus 100 can measure the object to be measured with measurement accuracy higher than that in preliminary measurement. In this case, the imaging units 17a and 17b are preferably disposed to satisfy the condition of a Scheimpflug optical system in which a sensor surface, an object surface, and the principal plane of an imaging lens intersect one another on one straight line. When switching between the first measurement mode and the second measurement mode, an autofocus mechanism provided for the illumination unit 16 preferably adjusts a focus position so that a spot diameter becomes small within each measurement range. Moreover, since the measuring head 1 shown in Fig. 2 includes a plurality of imaging units (17a and 17b), preliminary measurement may be performed by the plurality of imaging units based on the principle of a stereo method.

A measuring head 1 shown in Fig. 3 includes two illumination units 16a and 16b and one imaging unit 17, and uses the common imaging unit 17 when measuring the object to be measured in the first measurement mode and when measuring the object to be measured in the second measurement mode. The two illumination units 16a and 16b are arranged so that their line light illumination directions are different from each other. When measuring the object to be measured in the first measurement mode, the illumination unit 16a and the imaging unit 17 are used. When measuring the object to be measured in the second measurement mode, the illumination unit 16b and the imaging unit 17 are used. This can set a measurement range when measuring the object to be measured in the first measurement mode (preliminary measurement) wider than that when measuring the object to be measured in the second measurement mode (actual measurement). That is, in preliminary measurement, the measurement apparatus 100 can measure the object to be measured while the distance between the surface to be measured and the measuring head 1 is set longer than that in actual measurement. On the other hand, in actual measurement, the measurement apparatus 100 can measure the object to be measured with measurement accuracy higher than that in preliminary measurement. When switching between the first measurement mode and the second measurement mode, an autofocus mechanism provided for the illumination units 16a and 16b preferably adjusts a focus position so that a spot diameter becomes small within each measurement range, similarly to the measuring head shown in Fig. 2.

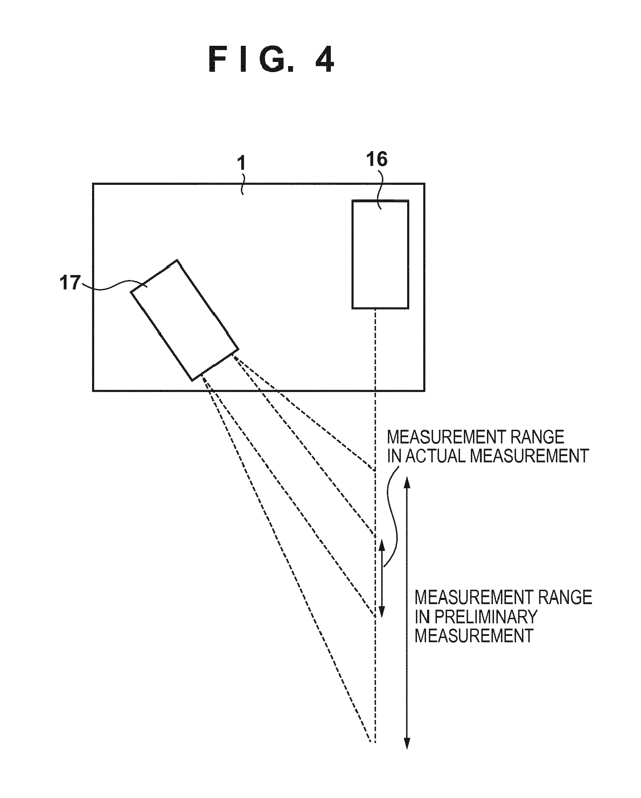

A measuring head 1 shown in Fig. 4 includes one illumination unit 16 and one imaging unit 17, and uses the common illumination unit 16 and imaging unit 17 when measuring the object to be measured in the first measurement mode and when measuring the object to be measured in the second measurement mode. In this case, a zoom mechanism included in the imaging unit 17 switches the measurement range of the measuring head 1. For example, the measurement apparatus 100 decreases the zoom magnification when measuring the object to be measured in the first measurement mode (preliminary measurement) and increases the zoom magnification when measuring the object to be measured in the second measurement mode (actual measurement). This can set a measurement range when measuring the object to be measured in the first measurement mode (preliminary measurement) wider than that when measuring the object to be measured in the second measurement mode (actual measurement). That is, in preliminary measurement, the measurement apparatus 100 can measure the object to be measured while the distance between the surface to be measured and the measuring head 1 is set longer than that in actual measurement. On the other hand, in actual measurement, the measurement apparatus 100 can measure the object to be measured with measurement accuracy higher than that in preliminary measurement. When switching between the first measurement mode and the second measurement mode, an autofocus mechanism provided for the illumination unit 16 preferably adjusts a focus position, similarly to the measuring head 1 shown in Fig. 2 or 3.

As described above, the measuring head 1 according to the first embodiment commonly uses at least one of the illumination unit 16 and the imaging unit 17 when measuring the object to be measured in the first measurement mode and when measuring the object to be measured in the second measurement mode. This can reduce the weight and size of the measuring head 1, thereby cutting the cost, in comparison with a measuring head which has the illumination unit 16 and the imaging unit 17 for each of the first measurement mode and the second measurement mode.

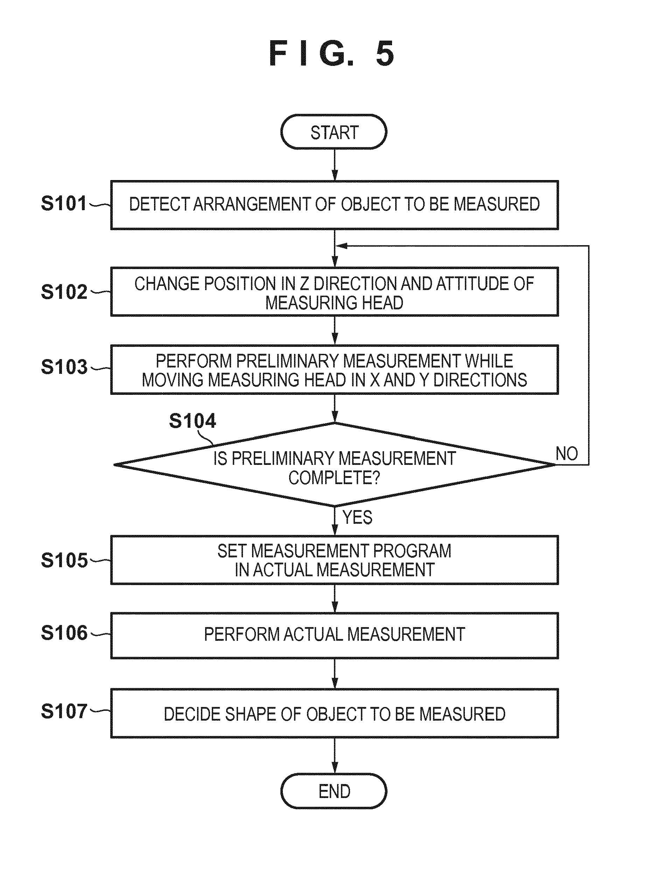

A process of measuring the shape of the object to be measured in the measurement apparatus 100 with the above arrangement according to the first embodiment will be described with reference to Fig. 5. Fig. 5 is a flowchart illustrating the process of measuring the shape of the object to be measured. The process shown in Fig. 5 is executed when the control unit 20 controls the driving unit 10 and the measuring head 1. Before the start of the flowchart shown in Fig. 5, the user arranges the object to be measured on the base 2. At this time, the position and shape of the object to be measured are detected in a preliminary measurement process (to be described later), and thus the necessity to correctly arrange the object to be measured on the base is small.

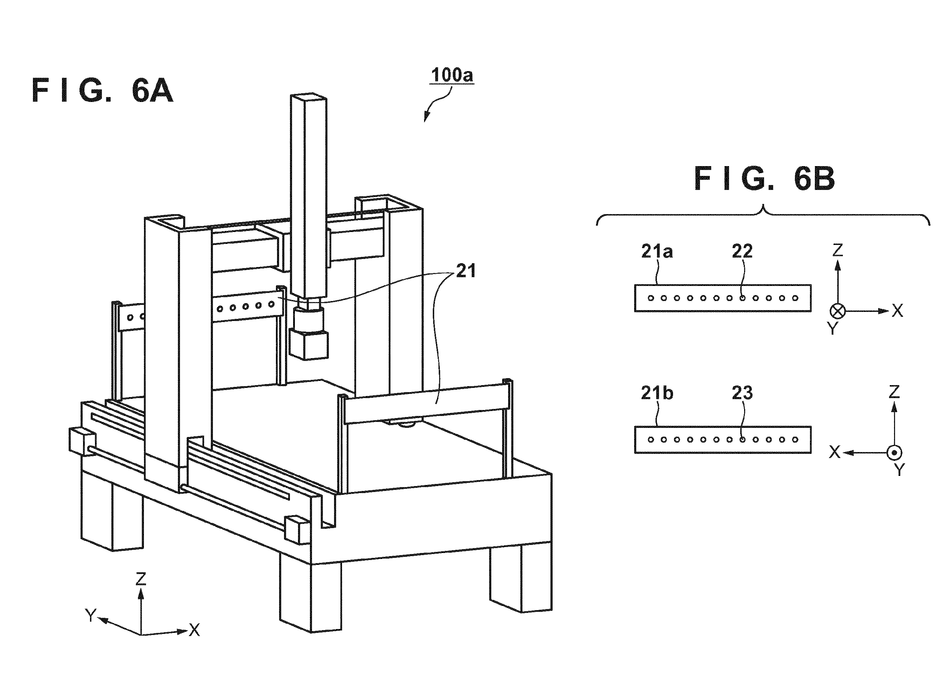

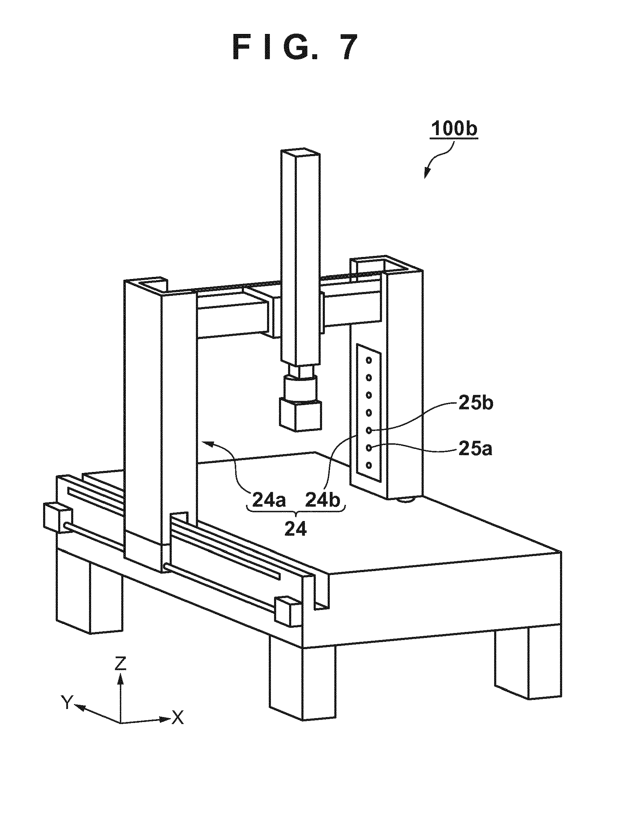

In step S101, the control unit 20 detects the arrangement of the object to be measured. The measurement apparatus 100 according to the first embodiment measures the shape of the object to be measured while moving the measuring head even in preliminary measurement. Since, however, the arrangement (position and attitude) of the object to be measured on the base is unknown in preliminary measurement, the measuring head 1 may collide against (contact) the object to be measured if the measuring head 1 is moved without identifying the state of the object to be measured. To avoid such situation, the measurement apparatus 100 includes a detection unit for detecting a region where the object to be measured is arranged (a region (occupancy region) including the object to be measured), and the control unit 20 moves the measuring head 1 based on the detection result of the detection unit in preliminary measurement. An example of the arrangement of a measurement apparatus including a detection unit for detecting the occupancy region of the object to be measured will now be described with reference to Figs. 6A, 6B, and 7.

Fig. 6A is a view showing an example of the arrangement of a measurement apparatus 100a including a detection unit. The measurement apparatus 100a shown in Fig. 6A includes, as a detection unit, a sensor 21 for detecting whether the object to be measured falls within an allowable region, that is, whether the occupancy region of the object to be measured is included in the allowable region. The allowable region indicates a predetermined region within which the object to be measured falls (a region within which the object to be measured is allowed to be arranged). In the measurement apparatus shown in Fig. 6A, the sensor 21 is arranged at a position indicating the upper limit of the height of the allowable region, thereby limiting only the height (position in the Z direction) of the allowable region. The sensor 21 is supported by the base 2, and is configured to include, for example, a transmission type multi-optical axis photoelectric sensor. As shown in Fig. 6B, the sensor 21 includes a light projector 21a in which a plurality of light-projecting elements 22 are linearly arranged in the X direction, and a light receiver 21b in which a plurality of light-receiving elements 23 are linearly arranged in the X direction to respectively face the light-projecting elements 22. It is possible to detect whether the object to be measured falls within the allowable region by determining whether all the light-receiving elements 23 receive light beams each projected by a corresponding one of the light-projecting elements 22. If, for example, the object to be measured blocks light projected by the light-projecting elements 22, some of the plurality of light-receiving elements 23 do not receive the light. If some of the light-receiving elements 23 do not receive the light, part of the object to be measured extends outside the allowable region (height), that is, the object to be measured does not fall within the allowable region. On the other hand, if there is no light-receiving element 23 which does not receive the light, that is, if all the light-receiving elements 23 receive the light, the object to be measured falls within the allowable region. When the sensor (detection unit) detects that the object to be measured falls within the allowable region (the occupancy region of the object to be measured is included in the allowable region), the measurement apparatus 100a with the above-described arrangement performs preliminary measurement while moving the measuring head outside the allowable region. When the sensor 21 detects whether the object to be measured is arranged within the allowable region, for example, the measuring head 1 is preferably retracted at a position up to which the Z spindle 5 can drive the measuring head 1 in the Z direction.

Fig. 7 is a view showing an example of the arrangement of a measurement apparatus 100b including a detection unit. The measurement apparatus 100b shown in Fig. 7 includes, as a detection unit, a sensor 24 for detecting the size (occupancy region) of the object to be measured. The sensor 24 is disposed on the side surfaces of the Y carriage 3, and is configured to include, for example, a transmission type multi-optical axis photoelectric sensor. The sensor 24 includes a light projector 24a in which a plurality of light-projecting elements are linearly arranged in the Z direction, and a light receiver 24b in which a plurality of light-receiving elements 25 are linearly arranged in the Z direction to respectively face the light-projecting elements. Each light-projecting element projects light toward a corresponding one of the light-receiving elements 25 while the Y carriage 3 is moved in the Y direction, and the position of a light-receiving element at a lowest position among the light-receiving elements 25 which receive the light is detected. This allows detection of the size (maximum height) of the object to be measured, that is, the occupancy region of the object to be measured. If, for example, a light-receiving element 25a among the plurality of light-receiving elements 25 does not receive the light and a light-receiving element 25b receives the light, a position in the Z direction where the light-receiving element 25b is arranged is set as the height of the object to be measured at the position of the sensor 24 in the Y direction. It is then possible to detect the maximum height of the object to be measured by performing detection by the sensor 24 while moving the Y carriage 3 in the Y direction. In the measurement apparatus 100b with the above arrangement, the control unit 20 performs preliminary measurement while moving the measuring head outside the occupancy region based on the size (occupancy region), detected by the sensor 24, of the object to be measured.

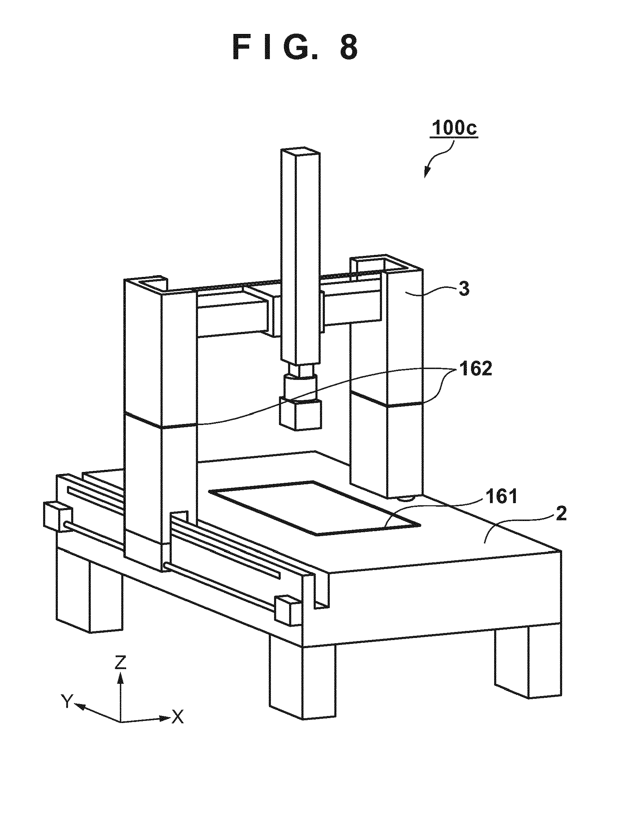

A method of confirming, without using the detection unit (sensor) shown in Figs. 6A and 6B or Fig. 7, whether the object to be measured falls within the allowable region, that is, whether the occupancy region of the object to be measured is included in the allowable region will be described with reference to Fig. 8. A measurement apparatus 100c shown in Fig. 8 includes not the detection unit (sensor) shown in Figs. 6A and 6B or Fig. 7 but indices 161 and 162 indicating the allowable region within which the object to be measured should fall. For example, the measurement apparatus 100c shown in Fig. 8 includes, on the base, the index 161 indicating the allowable region in the X and Y directions so as to visually confirm whether the object to be measured is arranged within the allowable region. The measurement apparatus 100c also includes the index 162 indicating the upper limit of the allowable region in the Z direction on the side surfaces of the Y carriage 3. In Fig. 8, the indices define the allowable region in the X, Y, and Z directions. The present invention, however, is not limited to this. For example, the allowable region may be defined in only one or two of the X, Y, and Z directions.

Returning to Figure 5, in step S102, the control unit 20 controls the driving unit 10 to change the position in the Z direction and the attitude of the measuring head 1. At this time, the control unit 20 changes the position of the measuring head in the Z direction to prevent the measuring head 1 from entering the occupancy region (or allowable region) of the object to be measured. In step S103, the control unit 20 controls the driving unit 10 to perform preliminary measurement while moving the measuring head 1 in the X and Y directions at the position in the Z direction and the attitude of the measuring head, which have been changed in step S102. At this time, the measurement mode of the measuring head 1 is set to the first measurement mode in which the measurement range is wide. In step S104, the control unit 20 determines whether preliminary measurement is complete. If preliminary measurement is not complete, the process returns to step S102 to repeat steps S103 and S104. On the other hand, if it is determined that preliminary measurement is complete, the shape and type of the object to be measured are specified (shape information of the object to be measured is generated) based on the result of preliminary measurement. The process then advances to step S105.

The procedure of preliminary measurement in steps S102 to S104 will be described. The control unit 20 changes the position of the measuring head 1 in the Z direction to the maximum position (the maximum position in the Z direction to which the Z spindle 5 can drive the measuring head 1) while the attitude of the measuring head 1 is fixed (step S102). The control unit 20 measures the shape of the object to be measured based on each of a plurality of positions of the measuring head 1 on a moving path while moving the measuring head 1 in the X and Y directions without changing the position of the measuring head 1 in the Z direction (step S103). If the control unit 20 determines in step S104 that this measurement operation does not complete preliminary measurement, the process returns to step S102 to move, in the -Z direction, the position of the measuring head in the Z direction by a predetermined amount (step S102). The control unit 20 measures the shape of the object to be measured based on each of a plurality of positions of the measuring head on a moving path while moving the measuring head in the X and Y directions at the position in the Z direction (step S103). If the control unit 20 determines in step S104 that this measurement operation does not complete preliminary measurement, the process returns to step S102 again to repeat steps S102 and S103. As described above, it is possible to acquire shape information (2.5-dimensional shape) of the object to be measured when seen from a given direction, by measuring the shape of the object to be measured while moving the measuring head in the X and Y directions at a plurality of positions in the Z direction. The amount by which the measuring head 1 is moved in the Z direction in step S102 is preferably almost equal to the measurement range of the measuring head 1 in the first measurement mode. In this manner, by setting the movement amount of the measuring head 1 in the Z direction to be equal to the measurement range, it is possible to decrease the number of times the position of the measuring head 1 in the Z direction is changed. To quickly complete preliminary measurement while decreasing the number of times the position of the measuring head 1 in the Z direction is changed, the measurement range of the measuring head in the first measurement mode is set wide. To suppress the number of times to, for example, four or smaller, the measurement range of the measuring head 1 in the first measurement mode is set to about 1/4 the difference between the maximum position of the measuring head in the Z direction and the upper limit position in the Z direction of the occupancy region (or allowable region) of the object to be measured. Alternatively, after changing the position within the drivable range of the measuring head 1 in the Z direction is completed, and shape information (2.5-dimensional shape) of the object to be measured when seen from a given direction is obtained, it may be determined in step S104 that preliminary measurement is not complete. In this case, the surface shape (side-surface shape) of the object to be measured is measured by sequentially changing the attitude of the measuring head 1 through determination in step S104. The reason why the surface shape of the object to be measured is measured by changing the attitude is that if the shape of the object to be measured is complicated, it is difficult to specify the object to be measured or its shape based on only the shape data (2.5-dimensional shape data) in one direction.

A method in which the control unit 20 determines in step S104 whether preliminary measurement is complete will be described. A method of determining whether preliminary measurement is complete is different depending on whether the control unit 20 has design data of the object to be measured. If the control unit 20 has design data of the object to be measured, it collates (compares) the shape information acquired in preliminary measurement of the object to be measured with its design data. If the matching rate between the shape information and design data of the object to be measured is equal to or larger than a predetermined threshold, the control unit 20 determines that preliminary measurement is complete, and specifies the shape and type of the object to be measured. On the other hand, if the control unit 20 does not have design data of the object to be measured, the control unit 20 determines that preliminary measurement is complete when preliminary measurement is performed for the entire surface to be measured or when preliminary measurement is performed at all positions to which the driving unit 10 can drive the measuring head 1.

In step S105, the control unit 20 sets a measurement program in actual measurement. The measurement program includes a moving path on which the measuring head 1 is moved in actual measurement, and the attitude of the measuring head 1 at each position on the moving path, and is set based on the shape information acquired in preliminary measurement of the object to be measured. The moving path of the measuring head 1 is set to satisfy an allowable condition. For example, the moving path is set so that the surface to be measured is maintained within the measurement range of the measuring head in the second measurement mode and the distance between the measuring head 1 and the surface to be measured becomes constant. A method of setting the measurement program will now be explained. A method of setting the measurement program in actual measurement is different depending on whether or not the control unit 20 has a measurement program prepared in advance based on the design data of the object to be measured (a measurement program in the design data). The measurement program in the design data includes a target moving path on which the measuring head is moved in actual measurement, and a target attitude of the measuring head at each position on the target moving path. Note that since the measurement program in the design data is defined by a work coordinate system (a coordinate system with reference to the object to be measured), it is necessary to convert the measurement program into that defined by an apparatus coordinate system by the following process in order to perform actual measurement.

If the control unit 20 has the measurement program in the design data, it superimposes the design data on the shape information so that the deviation (means square error) between the design data of the object to be measured and its shape information acquired in preliminary measurement becomes smallest. The control unit 20 decides the state (position and attitude) of the object to be measured on the measurement apparatus (apparatus coordinate system) by comparing the shape information of the object to be measured with its design data. Based on the decided state (position and attitude) of the object to be measured on the measurement apparatus, the control unit 20 converts the measurement program in the design data into a measurement program defined by the apparatus coordinate system. Note that this conversion operation sets the position and attitude of the measuring head to restore the relative position and attitude between the measuring head and the object to be measured, which are defined by the measurement program in the design data, in order to prevent collision of the measuring head with the object to be measured.

If the control unit 20 does not have the measurement program in the design data, it sets a measurement program in actual measurement based on, for example, the shape information acquired in preliminary measurement of the object to be measured, and the features (measurement range and the like) of the measuring head 1 in the second measurement mode. As described above, the measurement program in actual measurement can include the moving path of the measuring head in actual measurement, and the attitude of the measuring head at each position on the moving path. The control unit 20 sets the moving path of the measuring head 1 in actual measurement to satisfy an allowable condition. For example, the control unit 20 sets the moving path so that the surface to be measured is maintained within the measurement range of the measuring head 1 in the second measurement mode and the distance between the measuring head 1 and the surface to be measured becomes constant. Furthermore, the control unit 20 sets the attitude of the measuring head 1 at each position on the moving path based on the shape information acquired in preliminary measurement of the object to be measured. As described above, the measurement apparatus 100 according to the first embodiment acquires the shape information of the object to be measured by measuring the objet to be measured at various positions while moving the measuring head even in preliminary measurement. This can reduce the size of a portion of the object to be measured, whose shape cannot be identified in preliminary measurement, and the control unit 20 can set details of the measurement program (for example, the moving path of the measuring head 1) in actual measurement. That is, it is possible to measure the shape of the object to be measured with high accuracy in actual measurement (to be described later).

In step S106, the control unit 20 controls the position of the measuring head 1 based on the measurement program set in step S105 to perform actual measurement in the second measurement mode. By controlling the driving unit 10, the control unit 20 measures, in the second measurement mode, the object to be measured at each position on the moving path and an attitude corresponding to the position while moving the measuring head 1 along the moving path included in the measurement program. In step S107, based on a measurement result in step S106, the control unit 20 decides the shape (three-dimensional shape) of the object to be measured.

As described above, the measurement apparatus 100 of the first embodiment acquires the shape information of the object to be measured by measuring the object to be measured while moving the measuring head 1 in preliminary measurement in addition to actual measurement. Since the measurement apparatus 100 moves the measuring head 1 even in preliminary measurement, it includes the detection unit for detecting the arrangement of the object to be measured to prevent collision of the measuring head with the object to be measured. This allows a probe for preliminary measurement different from that for actual measurement to remotely measure the object to be measured at a plurality of positions and attitudes not to collide against the object to be measured while ensuring a driving range. This can reduce a blind spot or reliably specify the object to be measured even if there is a blind spot, thereby providing a measurement apparatus advantageous in automating measurement. The measuring head 1 according to the first embodiment has the first measurement mode used for preliminary measurement and the second measurement mode used for actual measurement. The present invention, however, is not limited to this. For example, the measuring head 1 may be configured to include a plurality of measurement modes, and select an optimal measurement mode according to the application purpose to measure the object to be measured.

<Second Embodiment>

A measurement apparatus according to the second embodiment of the present invention will be described. In the first embodiment, to prevent the measuring head from colliding against the object to be measured when moving the measuring head 1 in preliminary measurement, the detection unit detects the arrangement of the object to be measured. In the second embodiment, instead of detecting the arrangement of an object to be measured, a measuring head 1 includes a collision preventing sensor 27 to prevent the measuring head 1 from colliding against (contacting) the object to be measured.

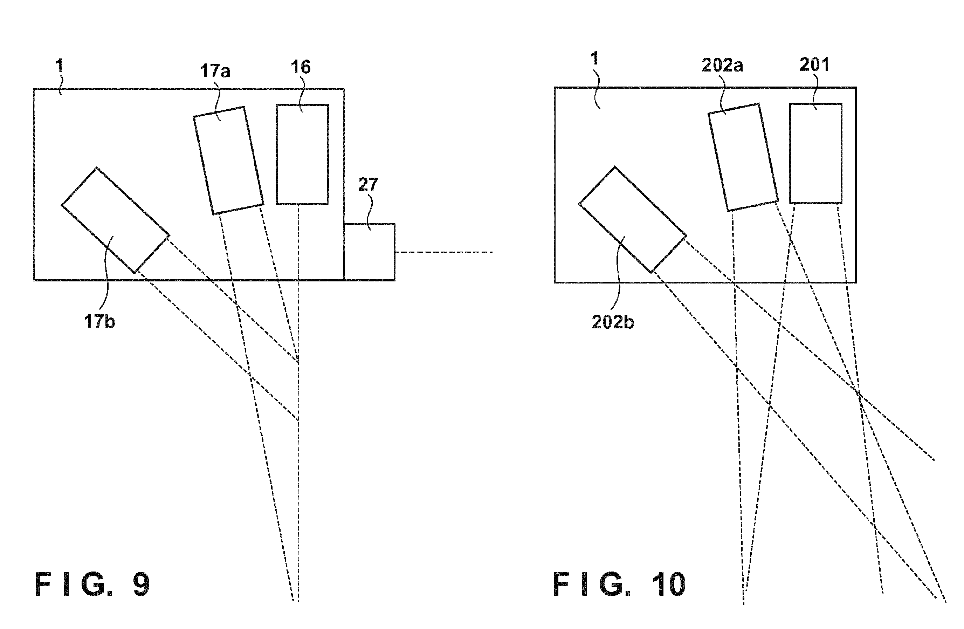

Fig. 9 shows the measuring head 1 including the collision preventing sensor 27. The collision preventing sensor 27 is a sensor for detecting the presence/absence of an object to be measured in the moving direction of the measuring head 1. If an object to be measured exists in this direction, for example, the sensor 27 can preferably measure the distance between the collision preventing sensor 27 and the object to be measured. An example of the collision preventing sensor 27 is a sensor based on the principle of triangulation. The sensor based on the principle of triangulation projects light onto a target object (object to be measured), and detects light reflected by the target object at a position different from a light projecting position. The sensor can measure the position of the target object based on the barycentric position of a light-receiving spot which changes depending on the position of the target object. To perform preliminary measurement using the measuring head 1 including the collision preventing sensor 27, a control unit 20 controls a driving unit 10 to move the measuring head 1 while confirming the absence of the object to be measured in the moving direction of the measuring head 1 based on the output of the collision preventing sensor 27. This can prevent the measuring head 1 from contacting the object to be measured in preliminary measurement. Note that the collision preventing sensor 27 is included in the measuring head 1 so that the measurement direction coincides with the moving direction of the measuring head 1. In the second embodiment, the measuring head 1 includes one collision preventing sensor 27. The present invention, however, is not limited to this. The measuring head 1 may include a plurality of collision preventing sensors.

<Third Embodiment>

A measurement apparatus according to the third embodiment of the present invention will be described. The arrangement of a measuring head 1 of the measurement apparatus according to the third embodiment is different from that of the measurement apparatus 100 according to the first embodiment. In the third embodiment, therefore, the arrangement of the measuring head 1 will be explained with reference to Figs. 10 to 12. The remaining components are the same as those of the measurement apparatus 100 according to the first embodiment and a description thereof will be omitted.

The arrangement of the measuring head 1 according to the third embodiment will be described with reference to Figs. 10 to 12. In the third embodiment, a case in which the shape of an object to be measured is measured using a pattern projection method (two-dimension pattern projection type triangulation) will be explained. The pattern projection method is a method of acquiring height information of the object to be measured by projecting a known two-dimensional pattern onto the object to be measured, imaging the object to be measured onto which the pattern is projected, and detecting the deformation amount of the two-dimensional pattern, which depends on the shape of the object to be measured. In the pattern projection method, the measuring head 1 can include an illumination unit 201 for illuminating the object to be measured with pattern light, and an imaging unit 202 (for example, a CCD camera or CMOS camera) for imaging the object to be measured which is illuminated with the pattern light. Note that the pattern projection method includes several methods of measuring the shape of the object to be measured, such as a phase shift method and spatial encoding method. The phase shift method is a method of sequentially projecting a plurality of sinusoidal patterns having different phases onto the object to be measured, and acquiring the shape of the object to be measured based on the phase information of each pixel of the imaging unit 202, and can improve the measurement accuracy. The spatial encoding method is a method of sequentially projecting grating patterns with the widths of bright and dark sections different from one another by twice, and acquiring the shape of the object to be measured based on the spatial code value of each pixel of the imaging unit 202, and can measure even an object to be measured which has a step or complicated shape. As described above, the measuring head 1 which uses the pattern projection method is configured to measure the shape of the object to be measured in a first measurement mode used for preliminary measurement and a second measurement mode used for actual measurement. An example of the arrangement of the measuring head 1 shown in each of Figs. 10 to 12 will be described.

The measuring head shown in Fig. 10 includes one illumination unit 201 and two imaging units 202a and 202b, and uses the common illumination unit 201 when measuring the object to be measured in the first measurement mode and when measuring the object to be measured in the second measurement mode. In this case, the two imaging units 202a and 202b are arranged so that their imaging directions are different from each other. When measuring the object to be measured in the first measurement mode, the illumination unit 201 and the imaging unit 202a are used. When measuring the object to be measured in the second measurement mode, the illumination unit 201 and the imaging unit 202b are used. This can set a measurement range when measuring the object to be measured in the first measurement mode (preliminary measurement) wider than that when measuring the object to be measured in the second measurement mode (actual measurement). That is, in preliminary measurement, the measurement apparatus can measure the object to be measured while the distance between a surface to be measured and the measuring head is set longer than that in actual measurement. On the other hand, in actual measurement, the measurement apparatus can measure the object to be measured with measurement accuracy higher than that in preliminary measurement. Note that since the measuring head 1 shown in Fig. 10 includes a plurality of imaging units (202a and 202b), preliminary measurement may be performed by the plurality of imaging units based on the principle of a stereo method.

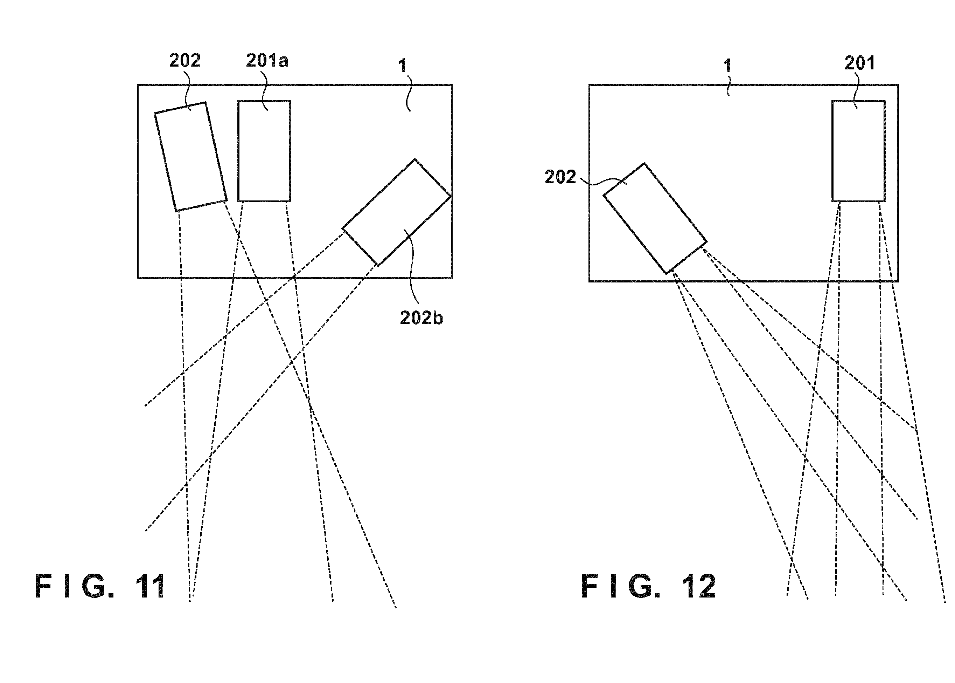

The measuring head 1 shown in Fig. 11 includes two illumination units 201a and 201b and one imaging unit 202, and uses the common imaging unit 202 when measuring the object to be measured in the first measurement mode and when measuring the object to be measured in the second measurement mode. In this case, the two illumination units 201a and 201b are arranged so that their pattern light illumination directions are different from each other. When measuring the object to be measured in the first measurement mode, the illumination unit 201a and the imaging unit 202 are used. When measuring the object to be measured in the second measurement mode, the illumination unit 201b and the imaging unit 202 are used. This can set a measurement range when measuring the object to be measured in the first measurement mode (preliminary measurement) wider than that when measuring the object to be measured in the second measurement mode (actual measurement). That is, in preliminary measurement, the measurement apparatus can measure the object to be measured while the distance between the surface to be measured and the measuring head is set longer. On the other hand, in actual measurement, the measurement apparatus can measure the object to be measured with measurement accuracy higher than that in preliminary measurement.

The measuring head 1 shown in Fig. 12 includes one illumination unit 201 and one imaging unit 202, and uses the common illumination unit 201 and imaging unit 202 when measuring the object to be measured in the first measurement mode and when measuring the object to be measured in the second measurement mode. In this case, a zoom mechanism included in the imaging unit 202 switches the measurement range of the measuring head 1. For example, the measurement apparatus decreases the zoom magnification when measuring the object to be measured in the first measurement mode (preliminary measurement) and increases the zoom magnification when measuring the object to be measured in the second measurement mode (actual measurement). This can set a measurement range when measuring the object to be measured in the first measurement mode (preliminary measurement) wider than that when measuring the object to be measured in the second measurement mode (actual measurement). That is, in preliminary measurement, the measurement apparatus can measure the object to be measured while the distance between the surface to be measured and the measuring head is set longer than that in actual measurement. On the other hand, in actual measurement, the measurement apparatus can measure the object to be measured with measurement accuracy higher than that in preliminary measurement.

As described above, the measurement apparatus according to the third embodiment commonly uses at least one of the illumination unit 201 and the imaging unit 202 when measuring the object to be measured in the first measurement mode and when measuring the object to be measured in the second measurement mode. This can reduce the weight and size of the measuring head 1, thereby cutting the cost similarly to the measuring head 1 according to the first embodiment, in comparison with a measuring head which has the illumination unit 201 and the imaging unit 202 for each of the first measurement mode and the second measurement mode.

<Fourth Embodiment>

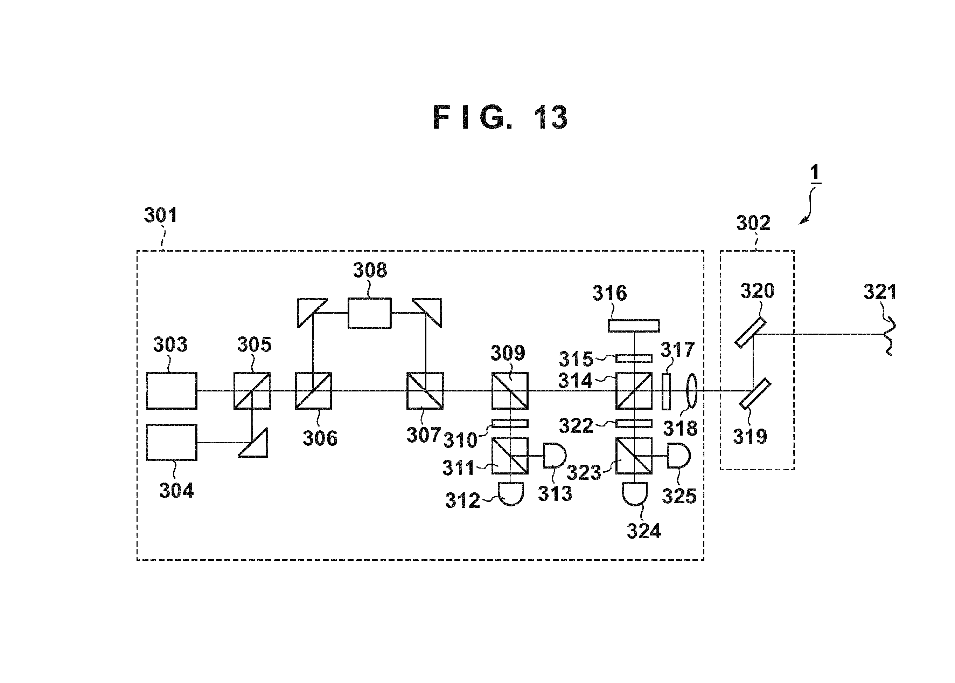

A measurement apparatus according to the fourth embodiment of the present invention will be described. The arrangement of a measuring head 1 of the measurement apparatus according to the fourth embodiment is different from that of the measurement apparatus 100 according to the first embodiment. The measuring head 1 according to the fourth embodiment uses a time-of-flight method (TOF) as a first measurement mode used for preliminary measurement, and an interference method as a second measurement mode used for actual measurement. The arrangement of the measuring head will be explained here with reference to Fig. 13. The remaining components are the same as those of the measurement apparatus 100 according to the first embodiment and a description thereof will be omitted.

The TOF method is a method of acquiring the distance between the measuring head 1 and a surface to be measured based on the flight time of light from when light emitted by a light source reaches an object to be measured until light reflected by the surface of the object to be measured reaches a detector. The TOF method includes several methods of acquiring the distance between the measuring head 1 and the surface to be measured, such as a pulse method and phase-difference method. The pulse method is a method of acquiring the distance by illuminating the surface to be measured with pulse light emitted by a light source, and measuring the time difference between the pulse light emitted by the light source and pulse light reflected by the surface to be measured. The phase-difference method is a method of acquiring the distance by illuminating the surface to be measured with light emitted by a light source while sinusoidally modulating the light intensity of the light, and measuring the phase difference between the light with which the surface to be measured is illuminated and light reflected by the surface to be measured. On the other hand, the interference method is a method of acquiring the distance by an interference beam generated by light to be measured which has been reflected by the surface to be measured and reference light reflected by a reference surface. In such method, for example, if a speckle pattern arising from the surface roughness of the surface to be measured has a random phase with a standard deviation larger than $2\pi$, a measurement error increases within a single wavelength (one wavelength). In the fourth embodiment, therefore, a multi-wavelength interference method of acquiring the distance between the measuring head and the surface to be measured by a plurality of different wavelengths will be described.

Fig. 13 is a view showing the measuring head 1 according to the fourth embodiment. The measuring head 1 shown in Fig. 13 includes a distance measurement unit 301, and an optical scanning unit 302 for scanning light emitted by the distance measurement unit 301 on the surface to be measured. The measuring head 1 shown in Fig. 13 can also switch between the TOF method as the first measurement mode used for preliminary measurement and the interference method as the second measurement mode used for actual measurement.

A case in which the object to be measured is measured by the interference method will be described with reference to Fig. 13 in connection with the arrangement of the measuring head 1. A wavelength filter 305 combines a light beam emitted by a light source 303 with that emitted by a light source 304, and a polarizing beam splitter 306 splits the combined light beam into two light beams. A light beam (to be referred to as a first light beam hereinafter) having been transmitted through the polarizing beam splitter 306 is guided to a polarizing beam splitter 307. On the other hand, an acoustic optical modulator 308 applies a given frequency shift dv to the incident wavelength of a light beam (to be referred to as a second light beam hereinafter) reflected by the polarizing beam splitter 306, and then the second light beam is guided to the polarizing beam splitter 307. The polarizing beam splitter 307 combines the first light beam and the second light beam with each other, and a beam splitter 309 splits the combined light beam into two light beams.

A light beam reflected by the beam splitter 309 is transmitted through a polarizer 310, and is separated, by a wavelength filter 311, into the light beam emitted by the light source 303 and the light beam emitted by the light source 304. The light beam emitted by the light source 303 is transmitted through the wavelength filter 311 to enter a detector 312, which detects an interference signal (beat signal) generated by the first light beam and the second light beam in the light beam emitted by the light source 303. On the other hand, the light beam emitted by the light source 304 is reflected by the wavelength filter 311 to enter a detector 313, which detects an interference signal (beat signal) generated by the first light beam and the second light beam in the light beam emitted by the light source 304. The interference signals detected by the detectors 312 and 313 will be referred to as reference signals hereinafter.

A polarizing beam splitter 314 splits the light beam having been transmitted through the beam splitter 309 into the first light beam and the second light beam. The first light beam is transmitted through the polarizing beam splitter 314, is changed into circularly polarized light by a λ/4 plate 317, and enters a surface to be measured 321 through a condenser lens 318 and the optical scanning unit 302. The first light beam (light beam to be measured) reflected by the surface to be measured 321 becomes circularly polarized light reversely rotating with respect to the first light beam upon incident on the surface to be measured 321, and enters the λ/4 plate 317 again through the optical scanning unit 302 and the condenser lens 318. The light beam to be measured is transmitted through the λ/4 plate 317 to become linearly polarized light rotated by 90° from that upon incidence, and is thus reflected by the polarizing beam splitter 314. The optical scanning unit 302 is formed by two galvano-mirrors 319 and 320 having different rotation axes, and can scan the light beam on the surface to be measured by changing the angle of each galvano-mirror. Note that the optical scanning unit 302 according to this embodiment is formed by two galvano-mirrors. The present invention, however, is not limited to this. For example, the optical scanning unit 302 may be formed by only one galvano-mirror or by polygon mirrors or the like instead of the galvano-mirrors.

On the other hand, the second light beam is reflected by the polarizing beam splitter 314, is changed into circularly polarized light by a λ/4 plate 315, and enters a reference surface 316. After being changed into circularly polarized light reversely rotating with respect to the second light beam upon incident on the reference surface 316, and transmitted again through the λ/4 plate 315, the second light beam (reference light beam) reflected by the reference surface 316 becomes linearly polarized light rotated by 90° from that upon incidence, and is transmitted through the polarizing beam splitter 314. The light beam to be measured and the reference light beam are combined with each other by the polarizing beam splitter 314, and transmitted through a polarizer 322. After that, a wavelength filter 323 splits the combined light beam into the light beam emitted by the light source 303 and that emitted by the light source 304. The light beam emitted by the light source 303 is transmitted through the wavelength filter 323 to enter a detector 324, which detects an interference signal (beat signal) generated by the light beam to be measured and the reference light beam in the light beam emitted by the light source 303. On the other hand, the light beam emitted by the light source 304 is reflected by the wavelength filter 323 to enter a detector 325, which detects an interference signal (beat signal) generated by the light beam to be measured and the reference light beam in the light beam emitted by the light source 304. The interference signals detected by the detectors 324 and 325 will be referred to as measurement signals hereinafter. Similarly to the reference signal, the measurement signal is an interference signal generated by the first light beam and the second light beam and corresponding to the frequency difference between the light beams. However, the phase of the interference signal differs from that of the reference signal due to the optical path length difference between the light beam to be measured and the reference light beam. By using a phase difference $\phi_1$ between the reference signal and the measurement signal in the light emitted by the light source 303 and a phase difference $\phi_2$ between the reference signal and the measurement signal in the light emitted by the light source 304, it is possible to acquire a distance L between the measuring head and the surface to be measured by:

$$L = \frac{\Lambda}{2}\left(\frac{\phi_1 - \phi_2}{2\pi}\right), \quad \Lambda = \frac{\lambda_1 \lambda_2}{|\lambda_1 - \lambda_2|} \qquad \ldots (1)$$

where $\lambda_1$ represents the wavelength of the light emitted by the light source 303 and $\lambda_2$ represents the wavelength of the light emitted by the light source 304.

A case in which the object to be measured is measured by the TOF method will be described with reference to Fig. 13. Unlike the interference method, only one light source is used to measure the object to be measured by the TOF method. In this embodiment, the phase-difference method in which a light source emits light while sinusoidally modulating the light intensity will also be explained. The measuring head 1 shown in Fig. 13 uses only the light source 303 to measure the surface to be measured by the TOF method (first measurement mode). The light source 303 emits light while sinusoidally modulating the light intensity by current modulation or the like.

The polarizing beam splitter 306 splits the light beam emitted by the light source 303 into two light beams. In measurement using the TOF method, however, one of the light beams is not necessary so a shutter (not shown) or the like preferably blocks the light beam reflected by the polarizing beam splitter 306. The beam splitter 309 splits the light beam having been transmitted through the polarizing beam splitter 306 into two light beams. The light beam reflected by the beam splitter 309 enters the detector 312 through the polarizer 310 and the wavelength filter 311. The detector 312 detects the light intensity signal of the light beam emitted by the light source 303. The light intensity signal detected by the detector 312 will be referred to as a reference signal hereinafter. On the other hand, the light beam having been transmitted through the beam splitter is transmitted through the polarizing beam splitter 314, is changed into a circularly polarized light by the λ/4 plate 317, and enters the surface to be measured 321 through the condenser lens 318 and the optical scanning unit 302. The light beam (light beam to be measured) reflected by the surface to be measured 321 becomes circularly polarized light reversely rotating with respect to the light beam upon incident on the surface to be measured 321, and enters the λ/4 plate 317 again through the optical scanning unit 302 and the condenser lens 318. The light beam to be measured is transmitted through the λ/4 plate 317 to become linearly polarized light rotated by 90° from that upon incidence, and is thus reflected by the polarizing beam splitter 314. The light beam to be measured enters the detector 324 through the polarizer 322 and the wavelength filter 323. The detector 324 detects the light intensity signal of the light beam to be measured. The light intensity signal detected by the detector 324 will be referred to as a measurement signal hereinafter.

There is a phase difference between the reference signal and the measurement signal according to the flight time of light. It is, therefore, possible to acquire the distance L between the measuring head and the surface to be measured by using the phase difference by:

$$ L = \frac{c}{2f}\left(\frac{\phi_1 - \phi_2}{2\pi}\right) \qquad \ldots (2) $$

where $\phi_1$ represents the phase of the reference signal, $\phi_2$ represents the phase of the measurement signal, f represents a modulation frequency, and c represents the velocity of light.

As described above, the measurement apparatus according to the fourth embodiment uses the TOF method as the first measurement mode of the measuring head and the interference method as the second measurement mode of the measuring head. The measurement apparatus can use the measuring heads 1 having the same arrangement when applying the TOF method and when applying the interference method, respectively. This can reduce the weight and size of the measuring head 1.

<Fifth Embodiment>

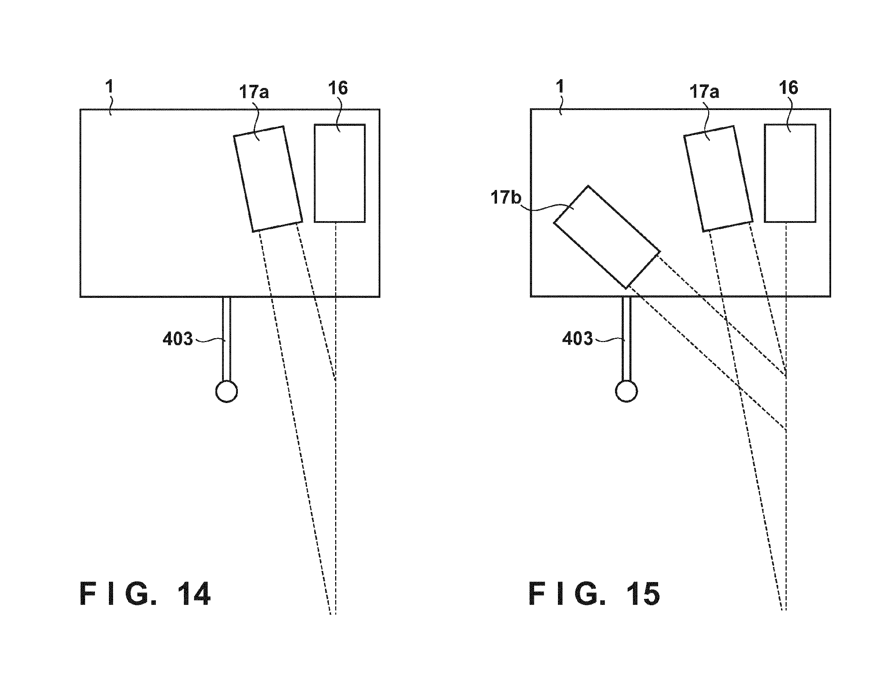

A measurement apparatus according to the fifth embodiment of the present invention will be described. The arrangement of a measuring head 1 of the measurement apparatus according to the fifth embodiment is different from that of the measurement apparatus 100 according to the first embodiment. In the measurement apparatus according to the fifth embodiment, the measuring head 1 includes a contact probe 403. In measurement in a second measurement mode of the measuring head 1, the contact probe 403 relatively scans a surface to be measured while its distal end is in contact with the surface to be measured. The arrangement of the measuring head 1 will be described with reference to Figs. 14 and 15. The remaining components are the same as those of the measurement apparatus 100 according to the first embodiment and a description thereof will be omitted.

Fig. 14 is a view showing the arrangement of the measuring head 1 according to the fifth embodiment. As shown in Fig. 14, the measuring head 1 can include an illumination unit 16 for illuminating an object to be measured with line light, an imaging unit 17a for imaging the object to be measured which is illuminated with the line light, and a contact probe 403 having a stylus with a spherical gauge head at its distal end. When measuring the object to be measured in the first measurement mode (preliminary measurement), the measuring head 1 measures the object to be measured using the illumination unit 16 and the imaging unit 17a. When measuring the object to be measured in the second measurement mode (actual measurement), the measuring head 1 measures the object to be measured using the contact probe 403. As described above, using the contact probe 403 in actual measurement decreases the measurement speed as compared with a non-contact probe but allows measurement of a measurement point such as the inner diameter of a deep hole which is difficult to measure by a non-contact probe. Furthermore, the contact probe 403 has measurement accuracy higher than that of a non-contact probe, and is therefore appropriate when the user wants to measure, with high accuracy, an object to be measured which has a complicated shape.

The measuring head 1 according to the fifth embodiment uses the non-contact probe (the illumination unit 16 and imaging unit 17a) to measure the object to be measured in the first measurement mode, and uses the contact probe 403 to measure the object to be measured in the second measurement mode. The present invention, however, is not limited to this. For example, the measuring head 1 may be configured to include one illumination unit 16, two imaging units 17a and 17b, and a contact probe 403, as shown in Fig. 15. In this case, for example, the illumination unit 16 and the imaging unit 17a are used to measure the object to be measured in the first measurement mode, and the illumination unit 16, the imaging unit 17b, and the contact probe 403 are used to measure the object to be measured in the second measurement mode. For example, in actual measurement, the contact probe 403 is used to measure a measurement point which is difficult to measure by a non-contact probe or a measurement point which requires high-accuracy measurement, and a non-contact probe (the illumination unit 16 and imaging unit 17b) is used to measure other measurement points. This allows high-accuracy measurement of objects to be measured which have various shapes, and can also improve the measurement speed of the object to be measured.

<Sixth Embodiment>

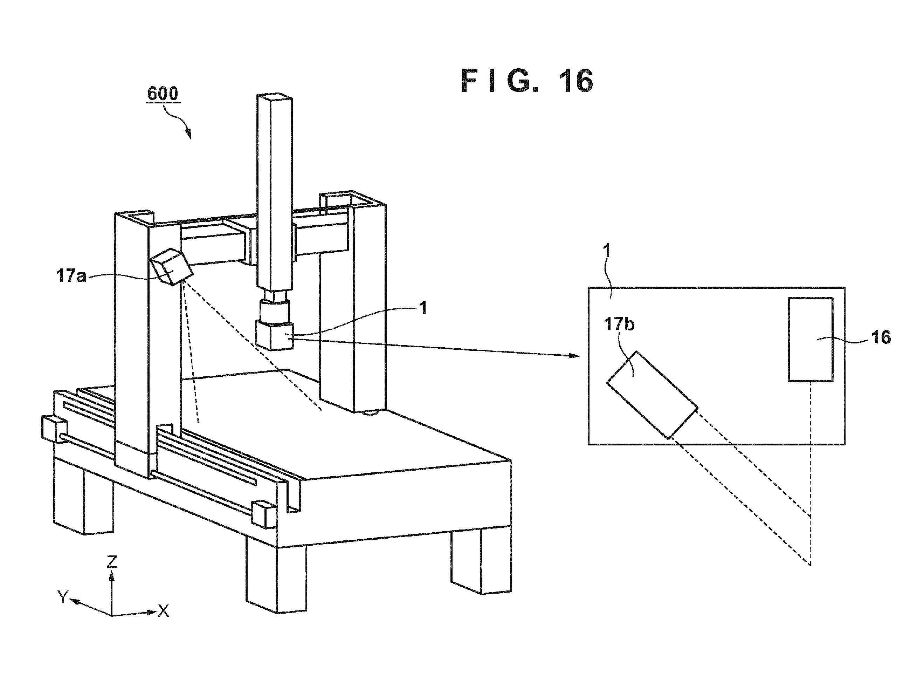

A measurement apparatus 600 according to the sixth embodiment of the present invention will be described with reference to Fig. 16. The arrangement of a measuring head 1 of the measurement apparatus 600 according to the sixth embodiment is different from that of the measurement apparatus 100 according to the first embodiment. In the measurement apparatus 600 according to the sixth embodiment, the measuring head 1 includes an illumination unit 16 for illuminating an object to be measured with line light, and an imaging unit 17b for imaging the object to be measured which is illuminated with the line light, as shown in Fig. 16. Furthermore, a Y carriage 3 includes an imaging unit 17a for imaging the object to be measured which is illuminated with the line light. When measuring the object to be measured in a first measurement mode, the measurement apparatus 600 according to the sixth embodiment measures the object to be measured using the illumination unit 16 and the imaging unit 17a. When measuring the object to be measured in a second measurement mode, the measurement apparatus 600 measures the object to be measure using the illumination unit 16 and the imaging unit 17b. Note that although the Y carriage 3 includes the imaging unit 17a, the present invention is not limited to this. For example, an X slider 4 or the like may include the imaging unit 17a.
While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1.    A measurement apparatus for measuring a shape of an object to be measured, comprising:

   a measuring head (1) configured to perform measurement in a first measurement mode, and perform measurement in a second measurement mode having measurement accuracy higher than that of the first measurement mode; and
   a control unit (20) configured to control the measuring head,
   wherein in the first measurement mode, the control unit moves the measuring head outside an occupancy region within which the object to be measured should fall while the object to be measured falls within the occupancy region, and
   in the second measurement mode, the control unit moves, based on a measurement result in the first measurement mode, the measuring head to satisfy an allowable condition in the second measurement mode.

2.    The apparatus according to claim 1, further comprising a detection unit (21,24) configured to detect the occupancy region of the object to be measured; and wherein in the first measuring mode the control unit moves the measuring head, based on a detection result of the detection unit, in a path which avoids contact between the measuring head and the object to be measured.

3.    The apparatus according to claim 2, wherein
   the detection unit detects that the object to be measured falls within a predetermined allowable region, and
   when the detection unit detects that the object to be measured falls within the allowable region, the control unit moves the measuring head outside the allowable region in the first measurement mode.

4.    The apparatus according to claim 2 or 3, wherein based on the occupancy region detected by the detection unit, the control unit moves the measuring head outside the occupancy region in the first measurement mode.

5.    The apparatus according to any preceding claim, further comprising
   a sensor (27) disposed on the measuring head and configured to detect the presence/absence of the object to be measured in a moving direction of the measuring head,
   wherein based on an output from the sensor, the control unit moves the measuring head in a path which avoids contact between the measuring head and the object to be measured.

6. The apparatus according to any preceding claim, wherein in the second measurement mode, the control unit controls an attitude of the measuring head based on a position of the measuring head.

7. The apparatus according to any preceding claim, wherein in the second measurement mode, based on a measurement result in the first measurement mode, the control unit moves the measuring head so that a distance from a surface of the object to be measured becomes substantially constant.

8. The apparatus according to any preceding claim, wherein the control unit specifies, based on a measurement result in the first measurement mode, a type, a position and an attitude of the object to be measured, and decides a moving path of the measuring head in the second measurement mode based on the position, the attitude, and a moving path of the measuring head prepared for the type of object to be measured.

9. The apparatus according to any preceding claim, wherein
the measuring head includes an illumination unit (16,201) configured to illuminate the object to be measured with light, and an imaging unit (17,202) configured to image the object to be measured which is illuminated with the light, and
the control unit commonly uses at least one of the illumination unit and the imaging unit when measuring the object to be measured in the first measurement mode and when measuring the object to be measured in the second measurement mode.

10. The apparatus according to any preceding claim, wherein
the measuring head includes a light source (303,304) configured to emit light, a detector (312,313,324,325) configured to detect light, and a reference surface (316),
in the first measurement mode, a distance between the measuring head and a surface of the object to be measured is obtained using the light source and the detector by a time-of-flight method, and
in the second measurement mode, the distance between the measuring head and the surface of the object to be measured is obtained using the light source, the reference surface, and the detector by an interference method of detecting, by the detector, an interference beam obtained by reference light which has been reflected by the reference surface and light to be measured which has been reflected by the surface of the object to be measured.

11. The apparatus according to any preceding claim, wherein
the measuring head includes a contact probe (403), and
in the second measurement mode, a distance between the measuring head and a surface of the object to be measured is obtained by bringing the contact probe into contact with the object to be measured.

12. A measurement method of measuring a shape of an object to be measured by using a measuring head (1) to perform measurement in a first measurement mode and perform measurement in a second measurement mode having measurement accuracy higher than that of the first measurement mode, the method comprising:

moving, in the first measurement mode, the measuring head outside an occupancy region within which the object to be measured should fall while the object to be measured falls within the occupancy region; and
moving, in the second measurement mode, based on a measurement result in the first measurement mode, the measuring head to satisfy an allowable condition in the second measurement mode.

# F I G. 1

F I G. 2

MEASUREMENT RANGE
IN ACTUAL MEASUREMENT

MEASUREMENT RANGE
IN PRELIMINARY
MEASUREMENT

F I G. 3

MEASUREMENT RANGE
IN ACTUAL MEASUREMENT

MEASUREMENT RANGE
IN PRELIMINARY
MEASUREMENT

EP 2 749 840 A1

# F I G. 4

MEASUREMENT RANGE
IN ACTUAL MEASUREMENT

MEASUREMENT RANGE
IN PRELIMINARY
MEASUREMENT

# F I G. 5

START

S101 — DETECT ARRANGEMENT OF OBJECT TO BE MEASURED

S102 — CHANGE POSITION IN Z DIRECTION AND ATTITUDE OF MEASURING HEAD

S103 — PERFORM PRELIMINARY MEASUREMENT WHILE MOVING MEASURING HEAD IN X AND Y DIRECTIONS

S104 — IS PRELIMINARY MEASUREMENT COMPLETE?  NO

YES

S105 — SET MEASUREMENT PROGRAM IN ACTUAL MEASUREMENT

S106 — PERFORM ACTUAL MEASUREMENT

S107 — DECIDE SHAPE OF OBJECT TO BE MEASURED

END

FIG. 6A

100a

21

Z
Y ← → X

FIG. 6B

21a    22

Z
⊗ → X
Y

21b    23

Z
↑
X ←  ⊙
    Y

EP 2 749 840 A1

# F I G. 7

# F I G. 8

F I G. 10

F I G. 9

FIG. 12

FIG. 11

FIG. 13

EP 2 749 840 A1

F I G. 14

F I G. 15

EP 2 749 840 A1

EP 2 749 840 A1

# F I G. 16

**EP 2 749 840 A1**

Europäisches
Patentamt
European
Patent Office
Office européen
des brevets

## EUROPEAN SEARCH REPORT

Application Number

EP 13 19 9527

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 916 922 A2 (MITUTOYO CORP [JP]) 19 May 1999 (1999-05-19) * abstract * ----- | 1-11 | INV. G01B21/20 G01B5/20 G01B11/24 |
| X | WO 94/14029 A1 (LK LTD [GB]; VERMEULEN MICHEL [BE]; BRUNEEL HERMAN [BE]) 23 June 1994 (1994-06-23) * page 5, line 6 - page 6, line 9; page 11, lines 6-9 * ----- | 1-11 | |

TECHNICAL FIELDS
SEARCHED (IPC)

G01B

The present search report has been drawn up for all claims

| Place of search | Date of completion of the search | Examiner |
|---|---|---|
| Munich | 7 March 2014 | Malcoci, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 13 19 9527

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2014

| Patent document cited in search report | | Publication date | Patent family member(s) | | Publication date |
|---|---|---|---|---|---|
| EP 0916922 | A2 | 19-05-1999 | DE | 69828568 D1 | 17-02-2005 |
| | | | DE | 69828568 T2 | 02-03-2006 |
| | | | EP | 0916922 A2 | 19-05-1999 |
| | | | JP | 3126114 B2 | 22-01-2001 |
| | | | JP | H11142141 A | 28-05-1999 |
| | | | US | 6163973 A | 26-12-2000 |
| WO 9414029 | A1 | 23-06-1994 | BE | 1006447 A3 | 30-08-1994 |
| | | | WO | 9414029 A1 | 23-06-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SONKO OSAWA.** Latest Trend and Future Business Development of Three-Dimensional Measurement. AIST (National Institute of Advanced Industrial Science and Technology), Geometrical Shape Measurement Study Group, 25 March 2010